# EUROPEAN PATENT APPLICATION

(11) **EP 3 451 116 A1**
(43) Date of publication of application: **06.03.2019**
(21) Application number: 18179611.1
(22) Date of filing: 25.06.2018
(51) Int. Cl.: G06F 1/16, A45C 5/14, H05K 5/00

(54) **DATA PROCESSING APPARATUS**

(30) Priority: 30.08.2017 CN 201721102836 U
(71) Applicant: Siemens Ltd. China, Beijing 100102 (CN)
(72) Inventor: Liu, Hai, Kunshan 215300 (CN); Zhu, Xue Feng, 215028 Suzhou, Jiangsu (CN); Bie, Hai Gang, Shanghai 201104 (CN); Sheng, Hai Bo, Suzhou 215123 (CN); Tao, Xi, Suzhou 215128 (CN); Hu, Cheng, Beijing 100075 (CN); Tian, Peng Wei, Beijing 100161 (CN)
(74) Representative: Isarpatent

(57) **Abstract**

This patent application discloses a data processing apparatus. The apparatus includes a box that accommodates a data processing module and a moving component disposed on the box, and the moving component includes a rolling member. In this application, the box is used for accommodating the data processing module used for performing data processing, and the moving component is disposed on the box. By means of rolling of the rolling member in the moving component, the data processing apparatus may be moved. When data processing services need to be executed in different scenarios, the data processing apparatus can be moved to different scenarios by using the rolling member, which is very convenient.

## Description

### BACKGROUND

### Technical Field

This utility model relates to the field of data processing technologies, and in particular, to a data processing apparatus.

### Related Art

In recent years, data services develop rapidly, and various data processing services (for example, big data processing services) are increasingly popular. Because data processing services may need to be executed in different scenarios, hardware devices for implementing the data processing services need to be moved to different scenarios. Based on this requirement, it is necessary to provide a data processing apparatus that is easy to move.

### SUMMARY

To resolve the foregoing and/or other technical problems, this utility model provides a data processing apparatus, which is easy to move and further easy to execute data processing services in different scenarios.

A data processing apparatus provided in this utility model includes a box that accommodates a data processing module and a moving component disposed on the box, where the moving component includes a rolling member.

In an implementation, the moving component may further include a pulling member.

In an implementation, materials of the box may include polypropylene.

In an implementation, the data processing apparatus may further include a display module, where the box includes a first box and a second box that are pivotally connected, the display module is disposed in the first box, the data processing module is disposed in the second box, and the data processing module is electrically connected to the display module.

In an implementation, the display module may include a display screen and a first fixation plate, and the display screen is fixed in the first box by using the first fixation plate.

In an implementation, the data processing apparatus may further include:
a protection plate, which is transparent or semitransparent and is covered on the display screen.

In an implementation, the data processing module may include a primary processing unit, a switch electrically connected to the primary processing unit, and a secondary processing unit connected to the switch electrically, and the primary processing unit exchanges information with the secondary processing unit by using the switch.

In an implementation, the primary processing unit and/or the secondary processing unit are/is disposed with a fixture block; and the apparatus further includes a second fixation plate, the second fixation plate is provided with a slot matched with the fixture block, and the primary processing unit and/or the secondary processing unit are/is fixed in the second box by using the second fixation plate.

In an implementation, the data processing apparatus may further include two sets of supports, each set of supports includes at least two supports fixed on the second fixation plate, and the two sets of supports are used for clamping the primary processing unit, the secondary processing unit, and the switch in two different directions.

In an implementation, the data processing apparatus may further include:
an interface module, disposed in the second box, and electrically connected to the data processing module, where the interface module includes at least one data interface.

In an implementation, the data processing apparatus may further include:
a heat dissipation module, disposed in the second box, and corresponding to the position of the data processing module.

In an implementation, the data processing apparatus may further include:
a protection shield, covered on each module in the second box.

In an implementation, the protection shield is provided with a heat dissipation hole.

In an implementation, the data processing apparatus may further include:
two sets of supports, where each set of supports includes at least two supports fixed on the second fixation plate, and the two sets of supports are used for clamping the primary processing unit, the secondary processing unit, and the switch in two different directions; and
a protection shield, covered on each module in the second box, where
the height of at least one of the two sets of supports is higher than that of each module in the second box, to support the protection shield.

In an implementation, the data processing apparatus may further include:
an interface module, disposed in the second box, and electrically connected to the data processing module, where the interface module includes at least one data interface; and
a protection shield, covered on each module in the second box, where
an area that is on the protection shield and that corresponds to the data interface is set to be hollowed-out.

It can be seen from the foregoing solutions that, in this utility model, the box is used for accommodating a data processing module used for performing data processing, and the moving component is disposed on the box. By means of rolling of the rolling member in the moving component, the data processing apparatus may be moved. When data processing services need to be executed in different scenarios, the data processing apparatus may be moved to different scenarios by using the rolling member, which is very convenient.

### BRIEF DESCRIPTION OF THE DRAWINGS

The following describes preferred embodiments of this utility model in detail with reference to the accompanying drawings, so that a person of ordinary skill in the art can better understand the foregoing and other features and advantages of this utility model. In the accompanying drawings:
FIG. 1 is a schematic diagram of a data processing apparatus in a closed state according to an embodiment of this utility model;
FIG. 2 is a schematic diagram of the data processing apparatus in FIG. 1 in an open state;
FIG. 3 is a schematic diagram of exploded structures of a first box in FIG. 2 and members installed in the first box; and
FIG. 4 is a schematic diagram of exploded structures of a second box in FIG. 2 and members installed in the second box.

| Number | Meaning |
|---|---|
| 1 | Box |
| 11 | First box |
| 12 | Scrolling wheel |
| 13 | Pull rod |
| 14 | First fixation plate |
| 15 | Display screen |
| 16 | Protection plate |
| 21 | Second box |
| 22 | Processing unit |
| 23 | Switch |
| 24 | Interface module |
| 241 | Data interface |
| 25 | Heat dissipation module |
| 261 | First support |
| 262 | Second support |
| 271 | Third support |
| 272 | Fourth support |
| 273 | Fifth support |
| 28 | Second fixation plate |
| 29 | Protection shield |
| 291 | Heat dissipation hole |
| 292 | Hollowed-out area |

### DETAILED DESCRIPTION

To make the objectives, technical solutions, and advantages of this utility model clearer, the following further describes this utility model in detail by using embodiments.

This utility model provides a data processing apparatus, and the apparatus may be used for data processing services, such as big data processing services (in this case, the data processing apparatus may also be referred to as a big data processing apparatus). The data processing apparatus provided in this utility model includes: a box for accommodating a data processing module and a moving component disposed on the box, where the moving component includes a rolling member.

It can be understood that, the data processing module disposed inside the box is a hardware module for implementing a data processing service, and data processing software or a data processing program is installed on the data processing module. Moreover, the moving component is a member or a set of members that can make the box easy to move. Because there are many types of members that can make the box easy to move, the moving component also has multiple forms. A rolling member is provided herein. There are multiple types of scrolling wheel members, such as an omni-directional wheel and a bi-directional wheel.

In the data processing apparatus provided in the instance of this application, the box is used for accommodating the data processing module used for performing data processing, and the moving component is disposed on the box. By means of rolling of the rolling member in the moving component, the data processing apparatus may be moved. When data processing services need to be executed in different scenarios, the data processing apparatus may be moved to the different scenarios by using the rolling member, which is very convenient.

The following describes some specific implementations of the data processing apparatus provided in this utility model with reference to the accompanying drawings.

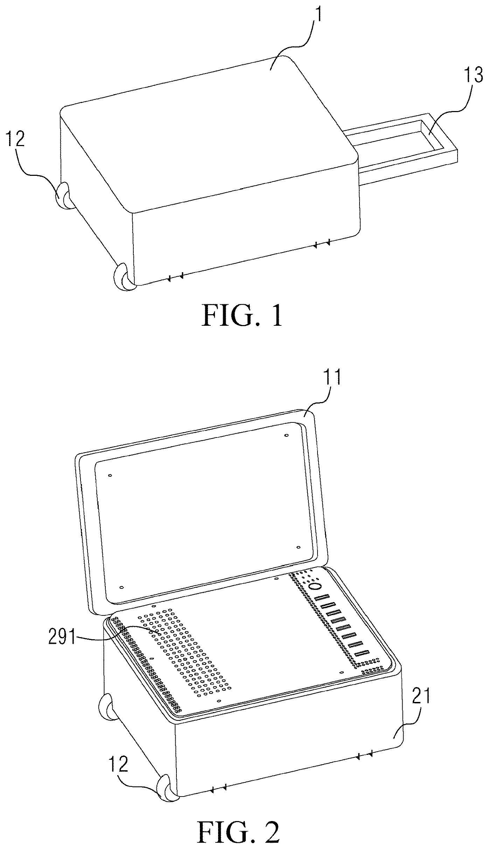

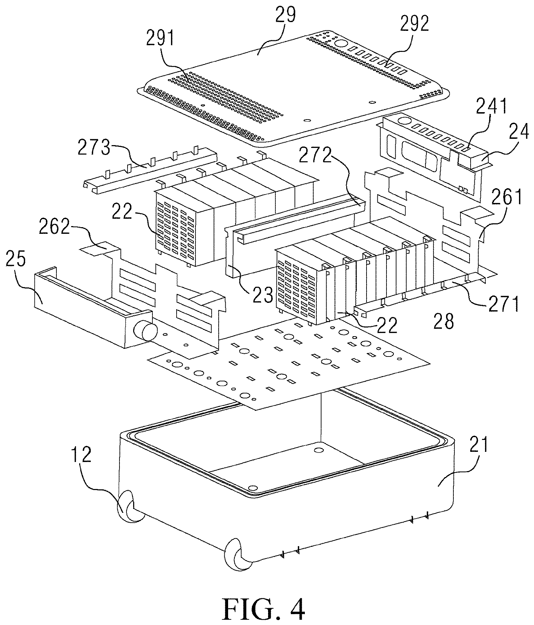

Referring to FIG. 1 to FIG. 4, the data processing apparatus in this embodiment is used for executing big data processing services. The data processing apparatus may also be referred to as a big data processing apparatus, and specifically includes: a box 1, a data processing module and a display module disposed inside the box 1, and a scrolling wheel 12 and a pull rod 13 disposed outside the box 1. Materials of the box 1 include polypropylene, and the box 1 includes a first box 11 and a second box 21 that are pivotally connected. The display module is disposed in the first box 11, the data processing module is disposed in the second box 21, and the data processing module is electrically connected to the display module. The data processing module includes a primary processing unit, a switch 23 electrically connected to the primary processing unit, and a secondary processing unit electrically connected to the switch 23. The primary processing unit exchanges information with the secondary processing unit by using the switch 23 (in FIG. 4, both the primary processing unit and the secondary processing unit are represented by using number 22). The data processing apparatus provided in this embodiment further includes an interface module 24 disposed in the second box 21, a heat dissipation module 25, and a protection shield 29. The interface module 24 is electrically connected to the data processing module, and the interface module 24 includes at least one data interface 241. The heat dissipation module 25 corresponds to the position of the data processing module. The protection shield 29 is covered on each module in the second box 21. The protection shield 29 is provided with a heat dissipation hole 291, and an area that is on the protection shield 29 and that corresponds to the data interface on the interface module 24 is set to be hollowed-out.

In this embodiment, because in addition to the data processing module, the box further includes the display module, and the display module is electrically connected to the data processing module, the display module may display a related process or data in a data processing process executed by the data processing module, so that a user can understand the data processing process or a data processing result more intuitively.

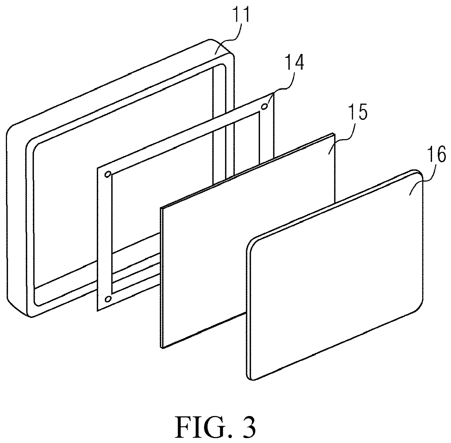

In actual application, the display module has multiple structure forms. For example, in FIG. 3, the display module includes a display screen 15 and a first fixation plate 14, and the display screen 15 is fixed in the first box 11 by using the first fixation plate 14. The display screen 15 may use a display screen of any type, such as a liquid crystal display screen, an electroluminescent display screen, an LED display screen, or an iconoscope display screen. To perform some protection for the display screen, a protection plate 16 may be further disposed. The protection plate 16 is transparent or semitransparent and is covered on the display screen 15. Materials of the protection plate 16 may be selected according to needs. For example, a lightweight acrylic plate with good light transmittance is used. Certainly, other materials may also be used. In addition, the display module may be connected to the data processing module by using a cable, and may be specifically connected to the primary processing unit in the data processing module by using the cable.

It can be understood that, in some alternative embodiments, the display module may be not disposed, and instead, related data of the data processing process may be displayed by externally connecting to a display device when necessary. Therefore, the display module is not disposed necessarily, and corresponding technical solutions can all achieve the basic objective of moving the data processing apparatus easily, and therefore shall also fall within the protection scope of this utility model.

In this embodiment, the box 1 includes a first box 11 and a second box 21 that are pivotally connected. After the box 1 is opened, the data processing process may be watched by using the display module in the first box 11. When the box 1 is closed, that is, when the first box 11 and the second box 21 are covered, the box 1 may have some protection effects for internal circuit structures such as the display module and the data processing module, for example, may have waterproof, dustproof, and vibration-proof effects.

It can be understood that, in some alternative embodiments, the box 1 may also use other structure forms, for example, no space used for accommodating a display module is disposed in the box. This may specifically be: no display module is disposed in the data processing apparatus, or the display module is disposed on an upper surface outside the box, and the display module is electrically connected to the data processing module inside the box, so that the data processing process may be watched without opening the box. No matter which structure of the box is used, corresponding technical solutions can all achieve the basic objective of moving the data processing apparatus easily, and therefore shall also fall within the protection scope of this utility model.

In this embodiment, in addition to the scrolling wheel 12, the pull rod 13 is further disposed outside the box. The pull rod 13 is used as a pulling member, and is used with the scrolling wheel 12. Compared with the manner of only disposing the scrolling wheel 12, the convenience of the data processing apparatus are more improved.

It can be understood that, in some alternative embodiments, the pull rod 13 is not disposed necessarily, and the basic objective of moving the data processing apparatus easily can also be achieved by only disposing the scrolling wheel 12. Even if a pull rod needs to be disposed, other pulling members such as a hand hole and a handle may be used for replacing the pull rod 13. Therefore, no matter whether to dispose a pulling member, or dispose a pulling member in any form, the technical solutions all fall within the protection scope of this utility model.

In this embodiment, the data processing module includes a primary processing unit, a switch 23, and a secondary processing unit. Because the primary processing unit exchanges information with the secondary processing unit by using the switch 23, the primary processing unit may send a control instruction to the secondary processing unit by using the switch 23, so that the secondary processing unit executes a big data processing service. The secondary processing unit may also feed back a processing result to the primary processing unit by using the switch 23. Because big data has characteristics of a large data amount and diversity, the data processing module provided in this embodiment is disposed with a primary processing unit responsible for controlling a data processing process and exchanging data with the outside and a secondary processing unit responsible for processing data, to ensure that data processing can be completed rapidly. The quantity of processing units may be set according to needs. For example, referring to FIG. 4, one primary processing unit and eleven secondary processing units are disposed, and the twelve processing units are disposed into two rows. In FIG. 4, the primary processing unit and the secondary processing units are all represented by number 22. The type and the model of the switch 23 may be selected according to needs, for example, an RJ45 switch is selected.

Because the data processing module in this embodiment includes multiple processing units, to improve the stability of the data processing apparatus, fixing measures may be taken, so that normal work cannot be affected by changing of the positions of the processing units inside the box in a moving process. For example, the primary processing unit and/or the secondary processing unit are/is disposed with a fixture block, and the second box 21 is disposed with a fixation plate. To distinguish from the first fixation plate 14, the fixation plate may be referred to as a second fixation plate 28. The second fixation plate 28 is provided with a slot matched with the fixture block, and the primary processing unit and/or the secondary processing unit are fixed in the second box 21 by using the second fixation plate 28. That is, by means of the matching of the fixture block on the processing unit and the slot on the second fixation plate 28, the processing unit is fixed on the second fixation plate 28, and then the second fixation plate 28 is fixed in the second box 21 by using a manner (for example, the second fixation plate 28 is connected to the second box 21 by using bolts).

Certainly, because locking manner also cannot completely ensure that the positions of the processing units do not move, based on the locking, some clamping members may be further disposed, to clamp the processing units and the switch 23. For example, two sets of supports are disposed in the second box 21, each set of supports includes at least two supports fixed on the second fixation plate 28, and the two sets of supports are used for clamping the primary processing unit, the secondary processing unit, and the switch 23 in two different directions. For example, referring to FIG. 4, a first set of supports includes a first support 261 and a second support 262, and the first support 261 and the second support 262 clamp the processing units 22 and the switch 23 at the left and right sides. A second set of supports includes a third support 271, a fourth support 272, and a fifth support 273. The third support 271 is disposed at the front side of the two rows of processing units 22. The fourth support 272 is disposed between the two rows of processing units 22, and is fixed on the switch 23. The fifth support 273 is disposed at the back side of the two rows of processing units. The third support 271, the fourth support 272, and the fifth support 273 clamp the processing units 22 and the switch 23 in front and back directions. This manner of clamping the processing units 22 and the switch 23 by using two sets of supports can be disassembled conveniently and easy for future maintenance.

It can be understood that, in some alternative embodiments, a data processing module in another structure form may be selected according to factors such as the service type and the data amount of data processing. No matter which structure of the data processing module is used and no matter which manner is used for fixing the position of the data processing module, corresponding technical solutions can all achieve the basic objective of moving the data processing apparatus easily, and therefore shall also fall within the protection scope of this utility model.

In this embodiment, the box is further disposed with an interface module 24, the interface module 24 is connected to the data processing module, and the interface module 24 includes at least one data interface 241. Therefore, the data processing module may be connected to an external device by using the data interface 241 on the interface module 24. For example, when an external device collects some data that needs to be processed by the data processing apparatus, the data stored in the external device may be transmitted to the data processing module by using the data interface 241 on the interface module 24, to perform related processing. For another example, the big data processing apparatus is disposed with no display module, or when the data processing process needs to be shown in front of a lot of people in some scenarios, the display screen 15 disposed in the data processing apparatus is small, and the data processing apparatus needs to be connected to an external display device, the external display device may be connected to the data interface 241 on the interface module 24.

It can be understood that, in some alternative embodiments, not matter whether to dispose the interface module 24, the technical solutions can all achieve the basic objective of moving the data processing apparatus easily, and therefore shall also fall within the protection scope of this utility model.

In this embodiment, the box is further disposed with a heat dissipation module 25, and the heat dissipation module 25 corresponds to the position of the data processing module. Therefore, heat dissipation and temperature reduction may be performed on the data processing module, to prevent the data processing module from being damaged by excessively high temperature caused by long-time running, to further improve the thermal performance of the big data processing apparatus. The heat dissipation module 25 has multiple specific structure forms, such as a fan, a cooling fin, and a water cooling module, and a manner of combining heat conduction and heat dissipation (for example, a heat conducting pipe and a fan) may be further used for performing heat dissipation and temperature reduction.

It can be understood that, in some alternative embodiments, no matter whether to dispose the heat dissipation module 25, corresponding technical solutions can all achieve the basic objective of moving the data processing apparatus easily, and therefore shall also fall within the protection scope of this utility model.

In this embodiment, a protection shield 29 is disposed in the second box 21. Because the protection shield 29 is covered on each module in the second box 21, some protection effects may be performed on each module in the second box 21, to avoid or reduce damage of an outside force to each module in the second box 21. Moreover, because the protection shield 29 is provided with a heat dissipation hole 291, which may perform heat dissipation and temperature reduction on the data processing module, to prevent the data processing module from being damaged by excessively high temperature caused by long-time running, thereby improving the thermal performance of the big data processing apparatus.

It can be understood that, in some alternative embodiments, not matter whether to dispose the protection shield 29, or on the premise that the protection shield 29 is disposed, no matter whether the protection shield 29 is provided with a heat dissipation hole 291, corresponding technical solutions can all achieve the basic objective of moving the data processing apparatus easily, and therefore shall also fall within the protection scope of this utility model.

If in one embodiment, the protection shield 29 is disposed, and the two sets of supports for clamping the data processing module are also disposed, the height of at least one of the two sets of supports may be higher than that of each module in the second box 21, to support the protection shield 29. In this way, when the protection shield 29 is extruded to deform, due to the supporting of the support, the data processing module is not damaged. For example, in FIG. 4, the heights of the first support 261 and the second support 262 are higher than those of the processing units 22, the switch 23, and the like.

In this embodiment, because both the protection shield 29 and the interface module 24 are disposed, an area that is on the protection shield 29 and that corresponds to the data interface on the interface module 24 is set to be hollowed-out, such as multiple hollowed-out areas 292 of the protection shield 29 in FIG. 4, so as to expose each data interface 241 of the interface module 24. In FIG. 4, one hollowed-out area corresponds to one data interface. Certainly, other manners may be used. For example, the position corresponding to the entire interface module on the protection shield 29 is set to be hollowed-out. For another example, if the position corresponding to the entire interface module on the protection shield 29 is set to be hollowed-out, a cover body may be further disposed. The cover body is slightly larger than the hollowed-out area and can cover the hollowed-out area. When the interface module 24 is not used, the cover body is buckled, and only when the interface module 24 is used, the cover body is opened, to have some protection effects on the data interface 241 of the interface module 24. Certainly, if in one embodiment, the interface module 24 is not disposed in the second box 21, the protection shield 29 does not need to be provided with the hollowed-out area.

In this embodiment, materials of the box 1 include polypropylene (PP for short).

Because polypropylene is a lightweight semi-crystalline thermoplastic, has high impact resistance and strong mechanical properties, and further resists multiple types of organic solvents and acid and alkali corrosion, the weight of the box 1 is relatively light, and may further have a good protection effect for each module inside.

It can be understood that, in some alternative embodiments, the box 1 may further use other materials, such as, an acrylonitrile-butadiene-styrene copolymer (ABS for short) and polyvinyl chloride (PVC for short). No matter which material of the box is used, corresponding technical solutions can all achieve the basic objective of moving the data processing apparatus easily, and therefore shall also fall within the protection scope of this utility model.

The foregoing descriptions are merely preferred embodiments of this utility model, and are not used for limiting this utility model. Any modification, equivalent replacement, and improvement made without departing from the spirit and principle of this utility model shall fall within the protection scope of this utility model.

## Claims

1. A data processing apparatus, comprising a box that accommodates a data processing module and a moving component disposed on the box, wherein the moving component comprises a rolling member.

2. The apparatus according to claim 1, wherein the moving component further comprises a pulling member.

3. The apparatus according to claim 1, wherein materials of the box comprise polypropylene.

4. The apparatus according to claim 1, further comprising a display module, wherein the box comprises a first box and a second box that are pivotally connected, the display module is disposed in the first box, the data processing module is disposed in the second box, and the data processing module is electrically connected to the display module.

5. The apparatus according to claim 4, wherein the display module comprises a display screen and a first fixation plate, and the display screen is fixed in the first box by using the first fixation plate.

6. The apparatus according to claim 5, further comprising:
a protection plate, which is transparent or semitransparent and is covered on the display screen.

7. The apparatus according to claim 4, wherein the data processing module comprises a primary processing unit, a switch electrically connected to the primary processing unit, and a secondary processing unit electrically connected to the switch, and the primary processing unit exchanges information with the secondary processing unit by using the switch.

8. The apparatus according to claim 7, wherein the primary processing unit and/or the secondary processing unit are/is disposed with a fixture block; and the apparatus further comprises a second fixation plate, the second fixation plate is provided with a slot matched with the fixture block, and the primary processing unit and/or the secondary processing unit are/is fixed in the second box by using the second fixation plate.

9. The apparatus according to claim 8, further comprising two sets of supports, each set of supports comprises at least two supports fixed on the second fixation plate, and the two sets of supports are used for clamping the primary processing unit, the secondary processing unit, and the switch in two different directions.

10. The apparatus according to claim 4, further comprising:
an interface module, disposed in the second box, and electrically connected to the data processing module, wherein the interface module comprises at least one data interface.

11. The apparatus according to claim 4, further comprising:
a heat dissipation module, disposed in the second box, and corresponding to the position of the data processing module.

12. The apparatus according to any one of claims 4 to 11, further comprising:
a protection shield, covered on each module in the second box.

13. The apparatus according to claim 12, wherein the protection shield is provided with a heat dissipation hole.

14. The apparatus according to claim 8, further comprising:
two sets of supports, wherein each set of supports comprises at least two supports fixed on the second fixation plate, and the two sets of supports are used for clamping the primary processing unit, and the secondary processing unit, and the switch in two different directions; and
a protection shield, covered on each module in the second box, wherein
the height of at least one of the two sets of supports is higher than that of each module in the second box, to support the protection shield.

15. The apparatus according to claim 4, further comprising:
an interface module, disposed in the second box, and electrically connected to the data processing module, wherein the interface module comprises at least one data interface; and
a protection shield, covered on each module in the second box, wherein
an area that is on the protection shield and that corresponds to the data interface is set to be hollowed-out.
